# EUROPÄISCHE PATENTSCHRIFT

(11) **EP 0 659 242 B1**
(45) Veröffentlichungstag und Bekanntmachung des Hinweises auf die Patenterteilung: **17.04.1996**
(21) Anmeldenummer: 93918896.7
(22) Anmeldetag: 18.08.1993
(51) Int. Cl.: F16D 65/56, F16D 65/16

(54) **DRUCKLUFTBETÄTIGTE SCHEIBENBREMSE**
COMPRESSED-AIR ACTUATED DISC BRAKE
FREIN A DISQUE COMMANDE PAR AIR COMPRIME

(30) Priorität: 08.09.1992 DE 4230005
(43) Veröffentlichungstag der Anmeldung: 28.06.1995
(73) Patentinhaber: KNORR-BREMSE SYSTEME FÜR NUTZFAHRZEUGE GmbH, D-80809 München (DE)
(72) Erfinder: IRASCHKO, Johann, D-85301 Schweitenkirchen (DE)
(74) Vertreter: KUHNEN, WACKER & PARTNER
(86) Internationale Anmeldenummer: DE9300753
(87) Internationale Veröffentlichungsnummer: WO9405926

(56) Entgegenhaltungen:
- DE-A- 1 575 894
- DE-A- 2 030 355
- DE-A- 3 716 202
- DE-A- 4 032 885
- DE-C- 1 575 996

## Beschreibung

Die Erfindung bezieht sich auf eine druckluftbetätigte Scheibenbremse gemäß dem Oberbegriff des Anspruchs 1, die insbesondere für Straßenfahrzeuge und vorzugsweise für Nutzfahrzeuge vorgesehen ist.

Druckluftbetätigte bzw. pneumatische Scheibenbremsen der gattungsgemäßen Art sind beispielsweise aus der DE-OS 37 16 202 sowie aus der DE-OS 40 32 885 bekannt. Bei diesen bekannten Scheibenbremsen wird eine Bremsscheibe von einem in Axialrichtung verschiebbar gelagerten Bremssattel umfaßt, wobei auf einer Seite des Bremssattels eine druckluftbetätigte Zuspannvorrichtung angeordnet ist, bei deren Betätigung eine auf dieser Seite der Bremsscheibe befindliche Bremsbacke gegen diese gedruckt wird, worauf sich der Bremssattel aufgrund der Reaktionskräfte in Gegenrichtung verschiebt und dadurch eine auf der gegenüberliegenden Seite befindliche Bremsbacke gleichfalls an die Bremsscheibe andrückt.

Die Zuspannvorrichtung weist bei diesen bekannten Scheibenbremsen als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der mindestens eine ein Außengewinde aufweisende Stellspindel in einem jeweils zugeordneten Innengewinde der Traverse verstellbar verschraubt ist, wobei jede Stellspindel über ein an ihrem bremsscheibenseitigen Ende sitzendes Druckstück auf die zuspannseitig im Bremssattel bezüglich der Bremsscheibe verschiebbar gelagerte Bremsbacke einwirkt. Die Bremsbacke besteht aus einem Bremsbelag und einer metallischen Druckplatte, auf die das Druckstück der jeweiligen Stellspindel einwirkt.

Ein wesentliches Problem bei Scheibenbremsen dieser Art liegt darin, daß u.U. eine ungleichmäßige Abnutzung der Bremsbeläge auftritt, die sowohl in Umfangsrichtung bzw. Tangentialrichtung der Bremsbeläge gesehen auftritt (sogenannter Umfangsschrägverschleiß) als auch eine Radialkomponente aufweisen kann (sogenannter Radialschrägverschleiß). Der Bremsbelag erhält daher mit zunehmender Betriebsdauer in Umfangsrichtung und/oder in Radialrichtung eine Abschrägung bzw. abgeschrägte Fläche, die letztlich dazu führt, daß der Bremsbelag an einigen Stellen bereits vollständig abgerieben ist, obgleich an anderen Stellen noch eine ausreichende Belagstärke vorhanden ist. Der Bremsbelag bzw. die Bremsbacke muß folglich ausgewechselt werden, obgleich die Gesamt-Belagstärke noch ausreichen würde. Dieser vorzeitige Belagwechsel erhöht nicht nur die allgemeinen Betriebskosten des Fahrzeugs, sondern verkürzt auch die notwendigen Werkstattintervalle.

Untersuchungen haben gezeigt, daß der Umfangsschrägverschleiß im wesentlichen durch zwei sich überlagernde Effekte hervorgerufen wird. Der eine dieser beiden Effekte ist der sogenannte Servoeffekt, der auf die verschiedenen Wirkebenen zwischen der Reibkraft einerseits und der Abstützkraft des Bremsbelags andererseits zurückzuführen ist; dieser Servoeffekt wird mit abnehmender Belagstärke bzw. zunehmendem Belagverschleiß geringer. Der weiterhin genannte Effekt ist darauf zurückzuführen, daß sich der Bremsbelag im Belaggehäuse an nur einer Seite, nämlich auslaufseitig, abstützt, so daß bei der beim Zuspannen erforderlichen Verschiebung des Bremsbelags zur Bremsscheibe hin an der Abstützstelle des Bremsbelags die hier auftretende Reibungskraft zusätzlich überwunden werden muß.

Bei einer Zuspannvorrichtungen, die zwei in der Traverse gelagerte Spindeln aufweist, d.h. bei einer "zweispindeligen" Zuspannvorrichtungen, wie sie auch im ersten Ausführungsbeispiel der vorliegenden Erfindung dargestellt ist, ist es aufgrund der in dieser Belastungsrichtung doppelten Abstützung möglich, den Umfangsschrägverschleiß auf ein relativ kleines, in der Praxis ggf. vernachläßigbares Maß zu verringern, während bei einer einspindeligen Zuspannvorrichtung der auftretende Umfangsschrägverschleiß aufgrund der hauptsächlich in Tangentialrichtung wirkenden Reibungskräfte tatsächlich noch große Probleme bereitet.

Das Auftreten des Radialschrägverschleißes ist demgegenüber hauptsächlich auf andere Ursachen zurückzuführen, wie insbesondere elastische Verformungen des Bremssattels beim Zuspannen, wodurch eine entsprechend ungleichmäßige Kraftbeaufschlagung in Radialrichtung erfolgt. Diese Art des Schrägverschleißes tritt daher sowohl bei einspindeligen als auch bei zweispindeligen Zuspannvorrichtung in gleicher Weise und nahezu im gleichen Ausmaß auf.

Zusammenfassend ist daher festzuhalten, daß der Radialschrägverschleiß bei allen Scheibenbremsen der gattungsgemäßen Art Probleme bereitet, während der Umfangsschrägverschleiß bei einer einspindeligen Scheibenbremse ein größeres Problem darstellt als bei einer zweispindeligen Ausführungsform. In jedem Fall ist es anzustreben, jegliche Art von Schrägverschleiß so weit wie möglich zu verringern, um dadurch die Standzeit des Bremsbelags zu maximieren.

Der Erfindung liegt daher die Aufgabe zugrunde, eine druckluftbetätigte Scheibenbremse gemäß dem Oberbegriff des Anspruchs 1 derart weiterzubilden, daß bei möglichst geringem Aufwand eine Minimierung des Umfangsschrägverschleißes sowie des Radialschrägvetschleißes erzielbar ist.

Diese Aufgabe wird erfindungsgemäß mit dem im Kennzeichnungsteil des Anspruchs 1 angegebenen Maßnahmen gelöst.

Der grundlegende Lösungsgedanke der Erfindung ist darin zu sehen, die Bremsbeläge in einer solchen Weise unsymmetrisch mit der Zuspannkraft zu beaufschlagen, daß die oben genannten Einflüsse, die den Umfangsschrägverschleiß sowie den Radialschrägverschleiß hervorrufen, gerade kompensiert werden. Dies kann gemäß Anspruch 1 auf äußerst einfache Weise dadurch geschehen, daß die Kraftübertragungsfläche zwischen dem jeweiligen Druckstück der Stellspindel und der Druckplatte des Bremsbelags so ausgebildet wird, daß der betreffende Bremsbelag in Umfangsrichtung und/oder Radialrichtung der Bremsscheibe unsymmetrisch belastet wird. Bei geeigneter Ausbildung der Kraftübertragungsfläche ist es möglich, sowohl den Umfangsschrägverschleiß als auch den Radialschrägverschleiß praktisch vollständig zu eliminieren, wobei die geeigneten Werte sehr einfach durch empirische Versuche ermittelt werden können.

Gemäß der im Anspruch 2 angegebenen Weiterbildung der Erfindung wird die unsymmetrische Kraftübertragungsfläche in vorteilhafter Weise dadurch realisiert, daß der dem jeweiligen Druckstück zugewandte Bereich der Druckplatte des Bremsbelags als in Umfangsrichtung und/oder Radialrichtung keilförmig abgeschrägte Fläche ausgebildet wird. Eine derartige abgeschrägte Fläche erhöht die Herstellungskosten der Bremsbacken nur unwesentlich und fällt gegenüber dem hierdurch erzielten Zugewinn an erhöhter Standzeit des Belags und dementsprechend verlängerten Wartungsintervallen nicht ins Gewicht.

Alternativ hierzu ist es gemäß der im Anspruch 3 angegebenen Weiterbildung der Erfindung möglich, die der Druckplatte des Bremsbelags zugewandte Fläche des jeweiligen Druckstücks in Umfangsrichtung und/oder Radialrichtung keilförmig abzuschrägen. Diese Alternative hat den Vorteil, daß an den Bremsbacken bzw. deren Druckplatten keine Änderungen vorgenommen werden müssen; hierdurch wird erreicht, daß die Lagerhaltung für diese Ersatzteile nicht wie bei der ersten Alternative erschwert wird und auch keine zusätzlichen Bearbeitungsschritte für die Druckplatten erforderlich sind. Allerdings muß in diesem Fall durch geeignete Maßnahmen dafür gesorgt werden, daß die drehbeweglich an der Spindel gelagerten Druckstücke in einer genau definierten Lage an der betreffenden Druckplatte anliegen, um exakt die gewünschte Unsymmetrie in der Kraftbeaufschlagung zu gewährleisten. Dies kann beispielsweise durch einen geeignet geformten Anschlag erreicht werden, der eine bestimmte Lage des Druckstücks sicherstellt.

Obgleich es in der Theorie möglich ist, genau diejenigen Winkel der Abschrägung einzustellen, die in Abhängigkeit von den empirisch ermittelten Werten zu einer guten Kompensation des Schrägverschleißes führen, sind in der Praxis dadurch Grenzen gesetzt, daß die wirksame Abstützfläche zwischen Druckstück und Druckplatte in ihrem Kraftaufnahmevermögen, insbesondere im Hinblick auf Kippmomente, einen nicht zu vernachlässigenden Engpaß darstellt. Daher sollte gemäß Anspruch 4 angestrebt werden, den jeweiligen Maximalwert der empirisch ermittelten Abschrägung unter Berücksichtigung der wirksamen Abstützfläche zwischen Druckstück und Druckplatte unter Inkaufnahme eines gewissen restlichen Schrägverschleißes zu begrenzen.

Falls es sich bei der Scheibenbremse um eine zweispindelige Ausführungsform handelt, kann es gemäß Anspruch 6 bereits ausreichend sein, die Abschrägung lediglich in Radialrichtung vorzusehen, so daß durch diese Maßnahme entsprechend nur ein Radialschrägverschleiß kompensiert werden kann. Wie bereits eingangs erläutert wurde, stellt der Umfangsschrägverschleiß bei einer zweispindeligen Scheibenbremse nämlich infolge der doppelten Abstützung kein so großes Problem wie bei einer einspindeligen Ausführungsform dar. Im übrigen besteht hier die Möglichkeit, gemäß der Lehre der nicht vorveröffentlichten DE-OS 42 21 353, auf deren Offenbarung hier vollinhaltlich bezug genommen wird, einen Axialversatz der beiden Spindeln vorzusehen, wodurch gleichfalls eine Kompensation des Umfangsschrägverschleißes möglich ist. Selbstverständlich ist es auch möglich, beide Maßnahmen, d.h. Axialversatz der beiden Spindeln und Ausbildung einer in Umfangsrichtung unsymmetrischen Kraftübertragungsfläche, gleichzeitig vorzusehen.

Die Erfindung wird nachstehend anhand der Beschreibung von Ausführungsbeispielen unter Bezugnahme auf die Zeichnung näher erläutert. Es zeigen:
Fig.1 anhand eines Querschnitts den schematischen Aufbau einer zweispindeligen Zuspannvorrichtung;
Fig.2 einen Längsschnitt der in Fig. 1 gezeigten Zuspannvorrichtung; und
Fig.3 eine schematische Darstellung des Bereichs der erfindungsgemäßen Kraftübertragungsfläche bei einer einspindeligen Zuspannvorrichtung.

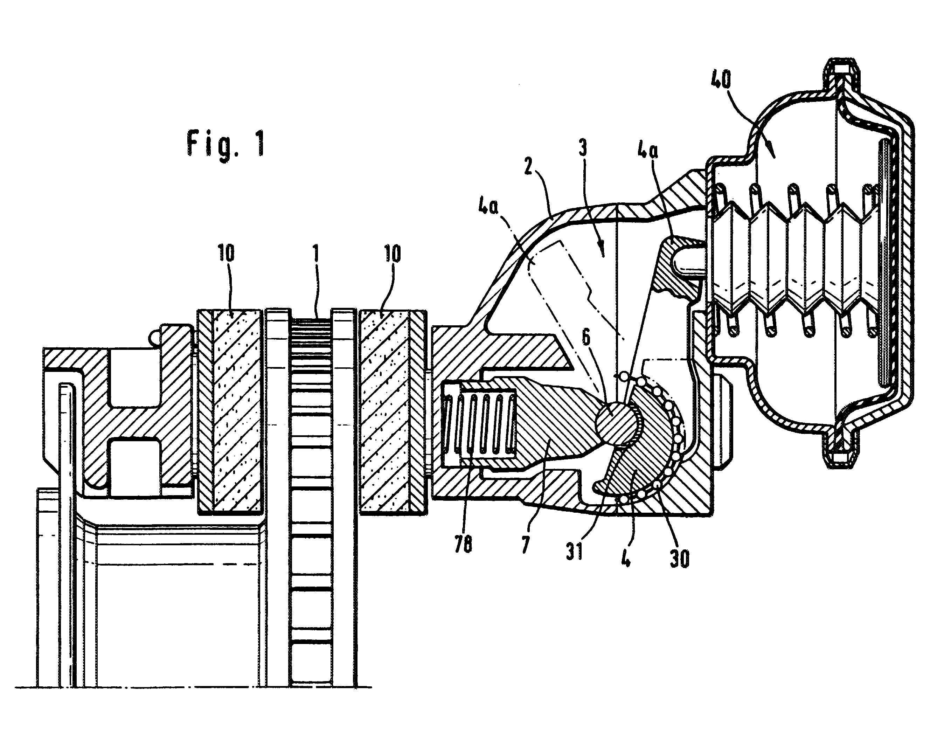

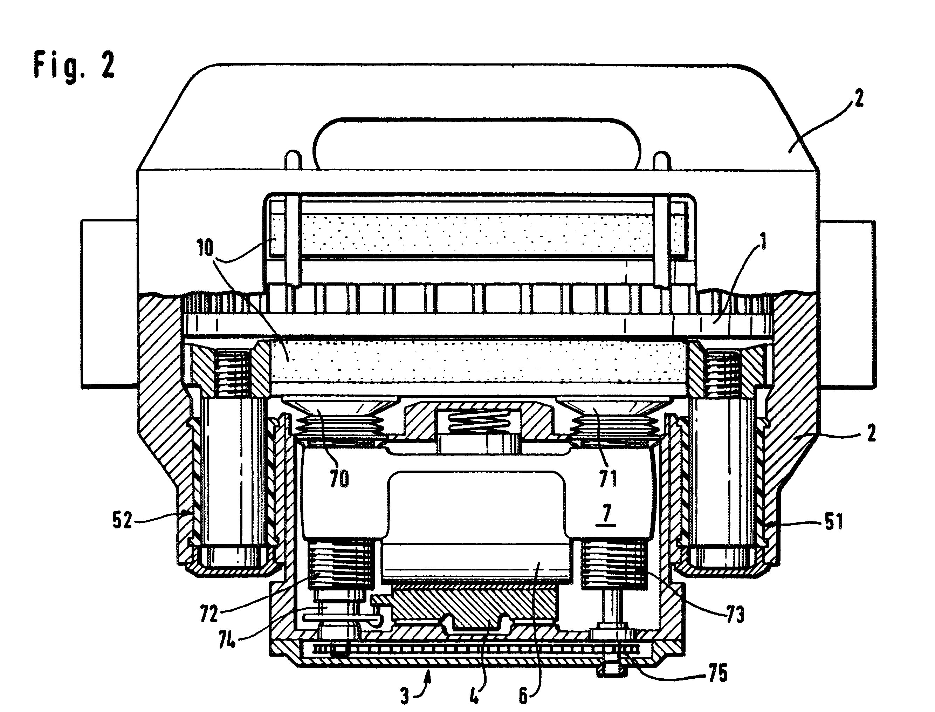

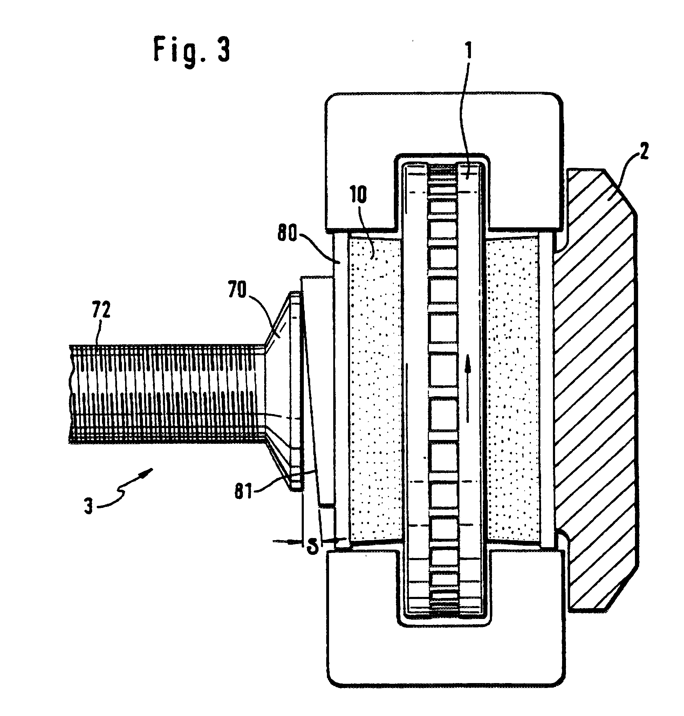

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung unter Bezugnahme auf die Fig.1 und 2 näher erläutert werden. Obgleich die in diesen Figuren gezeigte Ausführungsform der Zuspannvorrichtung zwei Spindeln aufweist, sei darauf hingewiesen, daß die Erfindung selbstverständlich insbesondere auch bei einer einspindeligen Zuspannvorrichtung verwendbar ist und dort eine noch größere Verringerung des Umfangsschrägverschleißes ermöglicht. Siehe hierzu auch die einspindelige Ausführungsform der Fig.3.

Wie aus den Figuren 1 und 2 zu erkennen ist, wird eine (innenbelüftete) Bremsscheibe 1, die an einer nicht näher bezeichneten Achse eines Nutzfahrzeugs befestigt ist, von einem Bremssattel 2 umfaßt. Der Bremssattel 2 ist gemäß Fig. 2 mittels eines starren Führungslagers 52 sowie mittels eines Ausgleichslagers 51 in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

Auf der in Fig. 1 rechten bzw. der in Fig. 2 unteren Seite der Bremsscheibe 1 ist eine schematisch mit dem Bezugszeichen 3 bezeichnete (zweispindelige) Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig. 1 in gestrichelter Darstellung angedeutete Position bewegt. Es sei angemerkt, daß die Betätigung des Drehhebels 4 selbstverständlich auch über ein Bremsgestänge erfolgen kann, so daß der Bremszylinder 40 gegebenenfalls an einem anderen Ort plaziert werden kann, falls der Einbauraum für die Scheibenbremse bzw. deren Zuspannvorrichtung begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

Wie insbesondere dem Längsschnitt der Fig. 2 entnehmbar ist, weist die Traverse 7 an beiden Seiten jeweils eine mit einem Innengewinde versehene Bohrung auf, in der jeweils eine Stellspindel 72 bzw. 73 justierbar verschraubt ist, deren in Fig.3 mit 711 bezeichnetes Außengewinde in einem entsprechend geformten Innengewinde der Traverse 7 geführt ist. An dem der Bremsscheibe 1 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 7 senkrecht zur Ebene der Bremsscheibe 1 erstrecken, liegen die Druckstücke 70 und 71 mit ihren flachen Enden an der Druckplatte 80 eines Bremsbelags 10 an. Druckplatte 80 und Bremsbelag 10 bilden eine austauschbare Bremsbacke, welche insbesondere in Umfangsrichtung zur Bremsscheibe 1 über nicht gezeigte Halterungen quer zur Bremsscheibe 1 verschiebbar geführt ist, wobei die Halterungen entweder dem Bremssattel 2 oder einem Bremsträger zugeordnet sein können.

Im Inneren der Stellspindel 72 ist eine Nachstelleinrichtung 74 angeordnet, die infolge einer Axialverzahnung drehfest mit der Stellspindel 72 gekoppelt und in axialer Richtung verschiebbar ist. Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Welle mit einer Synchronisationseinrichtung 75 gekoppelt ist, die das innenliegende Zahnrad und damit die Spindel 73 synchron mit der Nachstelleinrichtung 74 dreht. Hierdurch wird erreicht, daß das Druckstück 71 synchron mit dem Druckstück 70 nachgestellt wird.

Bei der in Fig.3 gezeigten einspindeligen Ausführungsform der Zuspannvorrichtung, die demzufolge lediglich eine einzige Stellspindel und damit nur ein Druckstück aufweist, wird die Stellspindel beispielsweise.in der Mitte der Traverse 7 angeordnet, während der Exzenter 6 sowie die die Druckfeder aufweisende Lagerung der Traverse 7 jeweils in doppelter Ausführung auf beiden Seiten dieser zentralen Stellspindel vorgesehen sind.

Nachfolgend wird das Arbeitsprinzip der erfindungsgemäßen Zuspanneinrichtung kurz erläutert. Bei Druckluftbeaufschlagung des Bremszylinders 40 wird der Betätigungsarm 4a gemäß Fig. 1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (das in der Praxis ca. 0,4 mm beträgt) die Bremsbacke (Druckplatte 80 und Bremsbelag 10) gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke gegen die Bremsscheibe 1 gepreßt wird.

Falls ein zu großes Lüftspiel vorliegt, was beispielsweise nach einem Belagwechsel oder bei zunehmendem Verschleiß der Bremsbeläge der Fall ist, sorgt die Nachstelleinrichtung 74 dafür, daß sich die Stellspindeln 72 und 73 solange drehen, bis das Lüftspiel seinen Sollwert erreicht. Auf diese Weise ist gewährleistet, daß die Scheibenbremse bis zum vollständigen Abrieb der Bremsbeläge 10 funktionsfähig bleibt.

Fig.3 zeigt eine einspindelige Ausführungsform von Stellspindel 72 bzw. 73 und Druckstück 70 bzw. 71, bei der die erfindungsgemäße Art der Kopplung zwischen diesen beiden Teilen verwirklicht ist. Da der genaue Aufbau der Nachstelleinrichtung sowie der Stellspindel hier nicht weiter interessiert, sind diese Teile hier nicht gezeigt.

Gemäß Fig.3 ist eine dem Druckstück 70 zugewandte hintere Fläche 81 der Druckplatte 80 des Bremsbelags 10 in Umfangsrichtung der Bremsscheibe 1 gesehen so abgeschrägt, daß sich zwischen der Druckfläche des Druckstücks 70 und der genannten Fläche 81 ein Winkel δ ergibt. In Radialrichtung der Bremsscheibe 1 gesehen weist die Fläche 81 ebenfalls eine Abschrägung auf, deren (in der Zeichnung nicht zu sehender) Winkel beispielsweise den Wert η habe. In der Fig.3 ist derjenige Zustand gezeigt, bei dem das Druckstück 70 der Stellspindel 72 die Druckplatte 80 bzw. deren Fläche 81 gerade berührt (Beginn des Zuspannvorgangs). Sobald die Stellspindel 72 jedoch weiter zugespannt wird und ein entsprechender Bremsdruck an den Reibflächen des Bremsbelags aufgebaut ist, bewirkt diese abgeschrägte Kraftübertragungsfläche, daβ die auf die wirksame Bremsfläche des Bremsbelags aufgebrachte Kraft unsymmetrisch zur Längsachse der Spindel 72 verläuft. Der Bremsbelag *(10)* wird hierdurch, je nach Einstellung der beiden Winkel δ und η in Umfangsrichtung und/oder Radialrichtung der Bremsscheibe unsymmetrisch belastet. Die beiden Winkel δ und η werden hierbei nach Maßgabe von empirisch durch entsprechende Feldversuche ermittelten Werten so gewählt, daß Umfangs- und Radialschrägverschleiß im wesentlichen eliminiert werden können.

Entgegen der Darstellung in Fig.3 ist es auch möglich, die der Druckplatte 80 des Bremsbelags 10 zugewandte Fläche des Druckstücks 70 in Umfangsrichtung und/oder Radialrichtung keilförmig abzuschrägen. Allerdings muß in diesem Fall durch geeignete Maßnahmen dafür gesorgt werden, daß das drehbeweglich an der Spindel 72 gelagerte Druckstück in einer genau definierten Lage an der Druckplatte 80 anliegt, um exakt die gewünschte Unsymmetrie in der Kraftbeaufschlagung zu gewährleisten, d.h. um die Zuordnung zu den Winkeln δ und η aufrecht zu erhalten. Dies kann beispielsweise durch einen geeignet geformten Anschlag erreicht werden, der eine bestimmte Lage des Druckstücks 70 sicherstellt.

Bei der Wahl der beiden Winkel δ und η ist jedoch zu beachten, daβ deren jeweiliger Maximalwert unter Berücksichtigung der wirksamen Abstützfläche zwischen Druckstück 70 und Druckplatte 80 unter Inkaufnahme eines gewissen restlichen Schrägverschleißes begrenzt bleibt, um dadurch dem begrenzten Kraftaufnahmevermögen der wirksamen Abstützfläche zwischen Druckstück 70 und Druckplatte 80, insbesondere im Hinblick auf Kippmomente, Rechnung zu tragen.

Bei der anhand der Fig.1 und 2 gezeigten zweispindeligen Ausführungsform kann es u.U. ausreichend sein, die Abschrägung lediglich in Radialrichtung vorzusehen, d.h. den Winkel δ zu Null zu machen; hier besteht nämlich die Möglichkeit, gemäß der Lehre der DE-OS 42 21 353 einen Axialversatz der beiden Spindeln 72 und 73 vorzusehen, wodurch gleichfalls eine Kompensation des Umfangsschrägverschleißes möglich ist. Selbstverständlich ist es auch möglich, beide Maßnahmen, d.h. Axialversatz der beiden Spindeln und Ausbildung einer in Umfangsrichtung unsymmetrischen Kraftübertragungsfläche, gleichzeitig vorzusehen.

Bezüglich weiterer, nicht näher erläuterter Merkmale und Wirkungen der Erfindung wird ausdrücklich auf die Figuren verwiesen.

## Patentansprüche

1. Druckluftbetätigte Scheibenbremse mit einem eine Bremsscheibe *(1)* umfassenden Bremssattel *(2)*, auf dessen einer Seite eine Zuspannvorrichtung *(3)* angeordnet ist, die bei Druckluftbeaufschlagung mindestens eine in einer Traverse *(7)* verstellbar angeordnete Stellspindel *(72, 73)* betätigt, die über ein an ihrem bremsscheibenseitigen Ende sitzendes Druckstück *(70, 71)* auf die Druckplatte *(80)* einer zuspannseitig im Bremssattel *(2)* bezüglich der Bremsscheibe *(1)* verschiebbar gelagerten Bremsbelag *(10)* einwirkt, wobei eine Nachstelleinrichtung *(74)* durch Einwirkung auf die Stellspindel(n) *(72, 73)* das sich infolge Belagverschleiß ändernde Lüftspiel im wesentlichen konstant hält,
*dadurch gekennzeichnet,* daß
die Kraftübertragungsfläche zwischen dem jeweiligen Druckstück *(70, 71)* der Stellspindel *(72, 73)* und der Druckplatte *(80)* des Bremsbelags *(10)* so ausgebildet ist, daß der Bremsbelag *(10)* in Umfangsrichtung und/oder Radialrichtung der Bremsscheibe *(1)* unsymmetrisch belastet ist.

2. Druckluftbetätigte Scheibenbremse nach Anspruch 1, *dadurch gekennzeichnet,* daß der dem jeweiligen Druckstück (70, *71)* zugewandte Bereich der Druckplatte *(80)* des Bremsbelags *(10)* in Umfangsrichtung und/oder Radialrichtung keilförmig abgeschrägt ist.

3. Druckluftbetätigte Scheibenbremse nach Anspruch 1, *dadurch gekennzeichnet,* daß die der Druckplatte *(80)* des Bremsbelags *(10)* zugewandte Fläche des jeweiligen Druckstücks *(70*, *71)* in Umfangsrichtung und/oder Radialrichtung keilförmig abgeschrägt ist.

4. Druckluftbetätigte Scheibenbremse nach Anspruch 2 oder 3, *dadurch gekennzeichnet,* daß der Maximalwert der jeweiligen Abschrägung unter Berücksichtigung der wirksamen Abstützfläche zwischen Druckstück *(70, 71)* und Druckplatte *(80)* begrenzt ist.

5. Druckluftbetätigte Scheibenbremse nach einem der Ansprüche 1 bis 4, *dadurch gekennzeichnet,* daß in der Traverse *(7)* eine einzige, etwa mittig angeordnete Stellspindel vorgesehen ist.

6. Druckluftbetätigte Scheibenbremse nach einem der Ansprüche 1 bis 4, *dadurch gekennzeichnet,* daß die Traverse *(7)* zwei Stellspindeln *(72, 73)* in Parallelanordnung aufweist, wobei die beiden Kraftübertragungsflächen im wesentlichen in Radialrichtung abgeschrägt sind.

## Claims

1. Compressed-air actuated disk brake comprising a caliper *(2)* which reaches around a brake disk *(1)* and on one side of which an application device *(3)* is arranged which acts on at least one actuating spindle *(72, 73)* adjustably arranged in a traverse *(7)* in response to actuation by compressed air, said actuating spindle *(72, 73)* acting on the pressure plate *(80)* of a brake lining *(10)* displaceably mounted with respect to said brake disk *(1)* through a pressure member *(70, 71)* mounted on the end thereof facing said brake disk, an adjusting means *(74)* maintaining the clearance varying due to lining wear essentially constant by acting on said actuating spindle(s) *(72, 73),*
*characterized in that*
the force transfer surface between the respective pressure member *(70, 71)* of said actuating spindle *(72, 73)* and said pressure plate *(80)* of said brake lining *(10)* is designed such that said brake lining *(10)* receives an asymmetrical load in the peripheral and/or radial directions of the brake disk *(1)*.

2. Compressed-air actuated disk brake according to claim 1, *characterized in that* the region of said pressure plate *(80)* of said brake lining *(10)* facing the respective pressure member *(70, 71)* has a conical chamfer in the peripheral and/or radial directions.

3. Compressed-air actuated disk brake according to claim 1, *characterized in that* the surface of the respective pressure member *(70, 71)* facing said pressure plate *(80)* of said brake lining *(10)* has a conical chamfer in the peripheral and/or radial directions.

4. Compressed-air actuated disk brake according to claim 2 or 3, *characterized in that* the maximum value of the respective chamfer is limited by taking into consideration the effective support area between pressure member *(70, 71)* and pressure plate *(80)*.

5. Compressed-air actuated disk brake according to one of claims 1 to 4, *characterized in that* a single actuating spindle is provided in the traverse *(7)* in an approximately central position.

6. Compressed-air actuated disk brake according to one of claims 1 to 4, *characterized in that* said traverse *(7)* comprises two actuating spindles *(72, 73)* in parallel arrangement, the two force transfer surfaces being chamfered essentially in the radial direction.

## Revendications

1. Frein à disque commandé par air comprimé comportant un étrier de frein (2) cernant un disque de frein (1), sur l'un côté duquel un dispositif de serrage (3) est disposé qui actionne sous l'effet de l'air comprimé au moins une vis de réglage (72, 73) réglable et disposée dans une traverse (7), vis de réglage qui agit par l'intermédiaire d'une pièce de pression (70, 71) logée sur son extrémité côté disque de frein sur la plaque de pression (80) d'une garniture de frein (10) qui est logée de manière à pourvoir se déplacer par rapport au disque de frein (1) sur le côté serrage de l'étrier de frein (2), un dispositif de rattrapage (74) maintenant essentiellement constant le jeu qui se modifie à la suite de l'usure de la garniture en agissant sur la/les vis de réglage (72, 73),
caractérisé en ce que
la surface de transmission de la force entre la pièce de pression (70, 71) de la vis de réglage (72, 73) et la plaque de pression (80) de la garniture de frein (10) est formée de manière à ce que la garniture de frein (10) en direction de la circonférence et/ou en direction radiale du disque de frein (1) supporte une charge asymétrique.

2. Frein à disque commandé par air comprimé selon la revendication 1, caractérisé en ce que la zone de la plaque de pression (80) de la garniture de frein (10) dirigée vers la pièce de pression (70, 71) est biseautée en forme de coin en direction de la circonférence et/ou en la direction radiale.

3. Frein à disque commandé par air comprimé selon la revendication 1, caractérisé en ce que la surface de la pièce de pression (70, 71) dirigée vers la plaque de pression (80) de la garniture de frein (10) est biseautée en forme de coin en direction de la circonférence et/ou en direction radiale.

4. Frein à disque commandé par air comprimé selon les revendications 2 ou 3, caractérisé en ce que la valeur maximale du biseautage est limitée compte tenu de la surface d'appui utile entre la pièce de pression (70, 71) et la plaque de pression (80).

5. Frein à disque commandé par air comprimé selon l'une quelconque des revendications 1 à 4, caractérisé en ce qu'une seule vis de réglage est prévue à peu près au centre dans la traverse (7).

6. Frein à disque commandé par air comprimé selon l'une quelconque des revendications 1 à 4, caractérisé en ce que la traverse (7) présente deux vis de réglage (72, 73) disposées en parallèle, les deux surfaces de transmission de la force étant essentiellement biseautées en direction radiale.
